# EUROPEAN PATENT APPLICATION

(11) **EP 4 131 497 A1**
(43) Date of publication of application: **08.02.2023**
(21) Application number: 21775058.7
(22) Date of filing: 23.03.2021
(51) Int. Cl.: H01M 4/58, H01M 10/0525

(54) **LITHIUM IRON PHOSPHATE POSITIVE ELECTRODE SHEET, PREPARATION METHOD THEREFOR, AND LITHIUM IRON PHOSPHATE LITHIUM-ION BATTERY**

(30) Priority: 25.03.2020 CN 202010219542
(71) Applicant: BYD Company Limited, Shenzhen, Guangdong 518118 (CN)
(72) Inventor: PAN, Yongzhi, Shenzhen, Guangdong 518118 (CN); YE, Caiyun, Shenzhen, Guangdong 518118 (CN); CHEN, Sanzhi, Shenzhen, Guangdong 518118 (CN); PAN, Yi, Shenzhen, Guangdong 518118 (CN)
(74) Representative: DehnsGermany Partnerschaft von Patentanwälten
(86) International application number: PCT/CN2021/082345
(87) International publication number: WO 2021/190490

(57) **Abstract**

A lithium iron phosphate cathode sheet, a preparation method thereof, and a lithium iron phosphate lithium-ion battery are disclosed , wherein the lithium iron phosphate cathode sheet includes lithium iron phosphate particles, and in the lithium iron phosphate particles, in terms of particle number, a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

## Description

### CROSS-REFERENCE TO RELATED APPLICATIONS

This application claims the priority to Chinese Patent Application No. 202010219542.3, titled "Lithium Iron Phosphate Cathode Sheet, Preparation Method thereof and Lithium-Ion Battery", filed on March 25, 2020, the content of which is incorporated herein by reference in its entirety.

### BACKGROUND

Lithium-ion batteries are widely used in 3C digital products, power tools, electric vehicles, aerospace and other fields due to their high operating voltage, high energy density, long life, wide operating temperature range and environmental friendliness. At present, lithium iron phosphate is one of the main power battery materials for electric passenger vehicles, electric large vehicles and electric special vehicles. The cathode sheet made of lithium iron phosphate has better dynamic performance and lower thermodynamic effect, resulting in a huge advantage in the market share of electric large vehicles and electric tool vehicles.

For the current commercial lithium iron phosphate batteries, the energy density of the battery is generally improved by increasing the compacted density of the cathode and anode sheets, but the current compacted density is below 2.6g/cm³ and the defect of poor cycle performance is generally existed.

### SUMMARY

In order to overcome the above-mentioned defects, the present disclosure provides a lithium iron phosphate cathode sheet with ultra-high compacted density and a preparation method thereof, and a lithium battery with high energy density and excellent cycle performance made from the lithium iron phosphate cathode sheet.

In order to achieve the above object, a first aspect of the present disclosure provides a lithium iron phosphate cathode sheet, wherein the lithium iron phosphate cathode electrode includes lithium iron phosphate particles, in the lithium iron phosphate particles, in terms of particle number, a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

In some embodiments of the present disclosure, in the lithium iron phosphate particles, wherein the percentage of lithium iron phosphate particles with a particle size in the range of 50nm-500nm is 75-87%, the percentage of lithium iron phosphate particles with a particle size greater than 500nm and less than 1000nm is 8-17%, and the percentage of lithium iron phosphate particles with a particle size in the range of 1µm-10µm is 3-7%.

In some embodiments of the present disclosure, wherein a compacted density of the lithium iron phosphate cathode sheet is 2.6 g/cm³-2.8 g/cm³, an areal density of the lithium iron phosphate cathode sheet is 380 g/m²-420 g/m², and a porosity of the lithium iron phosphate cathode sheet is 20%-30%.

In some embodiments of the present disclosure, wherein the lithium iron phosphate cathode sheet further includes a binder and a conductive agent; based on the weight of the lithium iron phosphate cathode sheet, a content of the lithium iron phosphate particles is 94-98 parts by weight, a content of the binder is 1-3 parts by weight, and a content of the conductive agent is 1-3 parts by weight; the binder includes one or more of polyvinylidene fluoride , sodium carboxymethyl cellulose , styrene-butadiene rubber, acrylonitrile multipolymer and polyacrylic acid, and the conductive agent includes one or more of carbon nanotubes, graphene, carbon black and carbon fiber.

A second aspect of the present disclosure provides a method for preparing a lithium iron phosphate cathode sheet, the method including: coating a slurry including lithium iron phosphate particles, a conductive agent, a binder and a solvent on an electrode current collector and pressing; in the lithium iron phosphate particles, in terms of particle number, wherein a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

In some embodiments of the present disclosure, in the lithium iron phosphate particles, wherein the percentage of lithium iron phosphate particles with a particle size in the range of 50nm-500nm is 75-87%, the percentage of lithium iron phosphate particles with a particle size greater than 500nm and less than 1000nm is 8-17%, and the percentage of lithium iron phosphate particles with a particle size in the range of 1µm-10µm is 3-7%.

In some embodiments of the present disclosure, based on the weight of the lithium iron phosphate cathode sheet, a content of the lithium iron phosphate particles is 94-98 parts by weight, a content of the binder is 1-3 parts by weight, and a content of the conductive agent is 1-3 parts by weight; the conductive agent includes one or more of carbon nanotubes, graphene, carbon black and carbon fiber, the binder includes one or more of polyvinylidene fluoride , sodium carboxymethyl cellulose , styrene-butadiene rubber, acrylonitrile multipolymer and polyacrylic acid, the solvent includes one or more of N-methylpyrrolidone , deionized water, acetone and dimethylacetamide, a content of the solvent in the slurry is 50-55 parts by weight; the electrode current collector is aluminum foil; and a pressure of the pressing is 4MPa-6MPa.

A third aspect of the present disclosure provides a lithium iron phosphate lithium-ion battery, the lithium iron phosphate lithium-ion battery includes the lithium iron phosphate cathode sheet described in the first aspect of the present disclosure or the lithium iron phosphate cathode sheet prepared by the method described in the second aspect of the present disclosure piece.

In some embodiments of the present disclosure, wherein a volumetric energy density of the lithium iron phosphate battery is 260 KWh/m³-280 KWh/m³, and a weight energy density of the lithium iron phosphate battery is 190 Wh/kg-210 Wh/kg.

In the present disclosure, a lithium iron phosphate cathode sheet with ultra-high compacted density is prepared by compacting lithium iron phosphate particles within a certain particle size and proportion range, and a lithium iron phosphate lithium-ion battery prepared from the lithium iron phosphate cathode sheet has high energy density and excellent cycle performance.

Other features and advantages of the present disclosure will be described in detail in the detailed description that follows.

### BRIEF DESCRIPTION OF DRAWINGS

The above-described additional aspects and advantages of the present disclosure will become apparent and readily understood from the following description of embodiments taken in conjunction with the accompanying drawings, wherein:
FIG. 1 is a SEM electron microscope image of the lithium iron phosphate cathode sheet prepared in Example 1 of the present disclosure.
FIG.2 is an enlarged view of a partial SEM electron microscope of the lithium iron phosphate cathode sheet prepared in Example 1 of the present disclosure.
FIG.3 is a plasma cutting SEM electron microscope image of the lithium iron phosphate cathode sheet prepared in Example 1 of the present disclosure.
FIG.4 is a plasma-cut SEM electron microscope image of the lithium iron phosphate cathode sheet prepared in Comparative Example 1 of the present disclosure.
FIG. 5 is a schematic structural diagram of a laminated lithium-ion battery in an embodiment of the lithium iron phosphate lithium-ion battery of the present disclosure.

### DETAILED DESCRIPTION

A first aspect of the present disclosure provides a lithium iron phosphate cathode sheet, wherein the lithium iron phosphate cathode sheet includes lithium iron phosphate particles, in the lithium iron phosphate particles, in terms of particle number, wherein a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

In the present disclosure, a lithium iron phosphate cathode sheet with ultra-high compacted density is prepared by compacting lithium iron phosphate particles within a certain particle size and proportion range, and a lithium iron phosphate lithium-ion battery prepared from the lithium iron phosphate cathode sheet has high energy density and excellent cycle performance.

In some embodiments of the present disclosure, in the lithium iron phosphate particles, wherein the percentage of lithium iron phosphate particles with a particle size in the range of 50nm-500nm is 75-87%, the percentage of lithium iron phosphate particles with a particle size greater than 500nm and less than 1000nm is 8-17%, and the percentage of lithium iron phosphate particles with a particle size in the range of 1 µm-10µm is 3-7%. The present disclosure does not require the D50 of the above three particle size ranges. In an embodiment, the D50 of the lithium iron phosphate particles with a particle size in the range of 50-500nm may be 90 nm-210nm; the D50 of the lithium iron phosphate particles with a particle size greater than 500 nm and less than 1000 nm may be 630nm-850nm; the D50 of the lithium iron phosphate particles with a particle size in the range of 1 µm-10 µm may be 3.4 µm-7.5 µm. The lithium iron phosphate particles within the above-mentioned particle size distribution and ratio range can fill the gaps between the particles by utilizing the difference advantages of different particle size distributions and ratios under high compaction pressure, so that the lithium iron phosphate particles of the present disclosure are not easy to be crushed and maintaining the integrity of the particles, meanwhile maintaining the capacity integrity of the lithium iron phosphate particles, so that the lithium iron phosphate cathode sheet has a higher energy density.

In an embodiment according to the present disclosure, the compacted density of the lithium iron phosphate cathode sheet may be 2.6g/cm³-2.8g/cm³, and further, the compacted density may be 2.65g/cm³-2.75g/cm³; the areal density of the lithium iron phosphate cathode sheet may be 380g/m²-420g/m², further, the areal density of the lithium iron phosphate cathode sheet may be 395g/m²-410g/m²; the porosity of the lithium iron phosphate cathode sheet may be 20%-30%, further, the porosity of the lithium iron phosphate cathode sheet may be 22%-28%. Among them, the compacted density was measured by laser thickness meter, the areal density was measured by punching sampling method, the volumetric energy density was measured by vernier caliper method, the weight energy density was measured by electronic analytical balance, and the porosity was measured by mercury porosimeter test method. The compacted density within the above range enables the lithium iron phosphate cathode sheet to have high areal density, volumetric energy density, weight energy density and ultra-high energy density, which ensures the cycle performance and other electrochemical properties of the lithium iron phosphate battery; the above range of areal density and porosity make the cathode sheet have good electrolyte wettability, reduce the resistivity of the cathode sheet, and reduce the electrochemical impedance of the high-pressure compacted lithium iron phosphate battery.

According to the present disclosure, in order to make the cathode sheet have a higher energy density, based on the weight of the lithium iron phosphate cathode sheet, the content of the lithium iron phosphate particles may be 94-98 parts by weight, and further, the content of the lithium iron phosphate particles may be 95-97 parts by weight. In order to integrate the lithium iron phosphate particles on the cathode sheet and ensure that the obtained cathode sheet has excellent conductivity, the lithium iron phosphate cathode sheet also includes a binder and a conductive agent, the content of binder is 1-3 parts by weight, further, the content of binder is 1-2 parts by weight, the content of conductive is 1-3 parts by weight, further, the content of conductive is 1.2-2 parts by weight. The present disclosure does not limit the types of the binder or the conductive, which can be conventional choices in the art. For example, the binder includes one or more of polyvinylidene fluoride PVDF, sodium carboxymethyl cellulose CMC, styrene-butadiene rubber SBR, acrylonitrile multipolymer LA and polyacrylic acid PAA, further, the binder includes one or more of polyvinylidene fluoride PVDF, sodium carboxymethyl cellulose CMC and styrene-butadiene rubber SBR. The conductive agent includes one or more of carbon nanotubes, graphene, carbon black and carbon fiber, further, the conductive agent includes one or more of carbon nanotubes, graphene, carbon black.

A second aspect of the present disclosure provides a method for preparing a lithium iron phosphate cathode sheet, the method including: coating a slurry containing lithium iron phosphate particles, a conductive agent, a binder and a solvent on an electrode current collector and pressing; in the lithium iron phosphate particles, in terms of particle number, wherein a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

The lithium iron phosphate cathode sheet prepared by the above method has ultra-high compacted density, areal density, volumetric energy density and weight energy density, so that the lithium iron phosphate battery prepared from the lithium iron phosphate cathode sheet has higher energy density and excellent cycle performance.

In an embodiment according to the present disclosure, in the lithium iron phosphate particles, in terms of particle number, wherein the percentage of lithium iron phosphate particles with a particle size in the range of 50nm-500nm is 75-87%, the percentage of lithium iron phosphate particles with a particle size greater than 500nm and less than 1000nm is 8-17%, and the percentage of lithium iron phosphate particles with a particle size in the range of 1µm-10µm is 3-7%. The present disclosure does not require the D50 of the above three particle size ranges. In an embodiment, the D50 of the lithium iron phosphate particles with a particle size in the range of 50-500nm may be 90 nm-210nm; the D50 of the lithium iron phosphate particles with a particle size greater than 500 nm and less than 1000 nm may be 630nm-850nm; the D50 of the lithium iron phosphate particles with a particle size in the range of 1 µm-10 µm may be 3.4µm-7.5µm. The lithium iron phosphate particles within the above-mentioned particle size distribution and ratio range can fill the gaps between the particles by utilizing the difference advantages of different particle size distributions and ratios under high compaction pressure, so that the lithium iron phosphate particles of the present disclosure are not easy to be crushed and maintaining the integrity of the particles, meanwhile maintaining the capacity integrity of the lithium iron phosphate particles, so that the lithium iron phosphate cathode sheet has a higher energy density.

In an embodiment according to the present disclosure, in order to fix the lithium iron phosphate on the current collector to form a sheet-like cathode electrode, the electrode current collector can be a conventional choice in the field, such as aluminum foil. In an embodiment, the aluminum foil includes any one of carbon-coated aluminum foil and perforated aluminum foil. According to the present disclosure, in order to prepare a cathode sheet with a higher compacted density, the pressure of the pressing in the present disclosure is 4 MPa-6 MPa, and further, it may be 5 MPa-5.5 MPa.

The preparation method of the lithium iron phosphate cathode sheet of the present disclosure is a conventional choice in the art. First, preparing a slurry containing lithium iron phosphate particles, a conductive agent, a binder and a solvent, and coating the slurry on the electrode current collector, and pressing the slurry. Based on the weight of the lithium iron phosphate cathode sheet, the content of the lithium iron phosphate particles is 94-98 parts by weight, the content of the binder is 1-3 parts by weight, and the content of the conductive agent is 1-3 parts by weight; further, the content of the lithium iron phosphate particles is 96-97 parts by weight, the content of the binder is 1.2-2 parts by weight, and the content of the conductive agent is 1-2 parts by weight. The conductive agent includes one or more of carbon nanotubes, graphene, carbon black and carbon fiber, further, the conductive agent includes one or more of carbon nanotubes, graphene, carbon black ; the binder includes one or more of polyvinylidene fluoride PVDF, sodium carboxymethyl cellulose CMC , styrene-butadiene rubber SBR, acrylonitrile multipolymer LA and polyacrylic acid PAA, further, the binder includes one or more of polyvinylidene fluoride PVDF, sodium carboxymethyl cellulose CMC and styrene-butadiene rubber SBR; the solvent includes one or more of N-methylpyrrolidone NMP , deionized water, acetone and dimethylacetamide DMAC. Furthermore, the solvent may include one or more of N-methylpyrrolidone NMP, acetone and dimethylacetamide DMAC. The addition amount of the solution is not limited. In an embodiment of the present disclosure, the solvent content in the slurry may be 50-55 parts by weight, and further, may be 50-52 parts by weight, so as to uniformly coat the lithium iron phosphate particles covered on the surface of the collector.

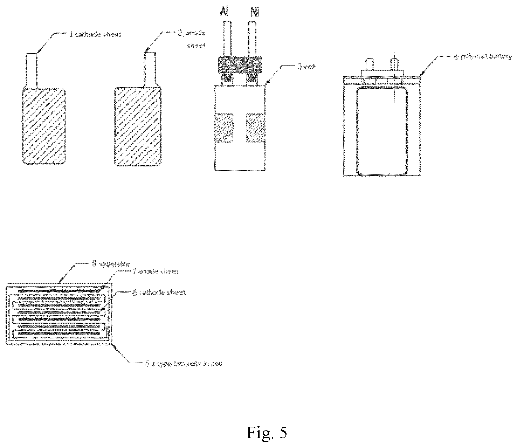

A third aspect of the present disclosure provides a lithium iron phosphate lithium-ion battery, the lithium iron phosphate lithium-ion battery includes the lithium iron phosphate cathode sheet of the first aspect of the present disclosure or the lithium iron phosphate cathode sheet obtained by the method of the second aspect. The volumetric energy density of the lithium iron phosphate battery including the lithium iron phosphate cathode sheet can be 260KWh/m³-280KWh/m³, and further, the volumetric density can be 264KWh/m³-280KWh/m³; The weight energy density can be 190Wh/kg-210Wh/kg, further, the weight energy density can be 195Wh/kg-205Wh/kg; the lithium iron phosphate lithium-ion battery prepared from the lithium iron phosphate cathode sheet has ultra-high energy density and excellent battery cycle performance. The present disclosure does not limit the form of the lithium iron phosphate lithium-ion battery, which can be a conventional choice in the art, such as any one of a laminated battery, a wound battery and a special-shaped battery, wherein the schematic structural diagram of a laminated battery is shown in Figure 5.

The present disclosure is illustrated below with reference to examples. It should be noted that these examples are merely illustrative and the present disclosure is not limited in any way.

### Example 1

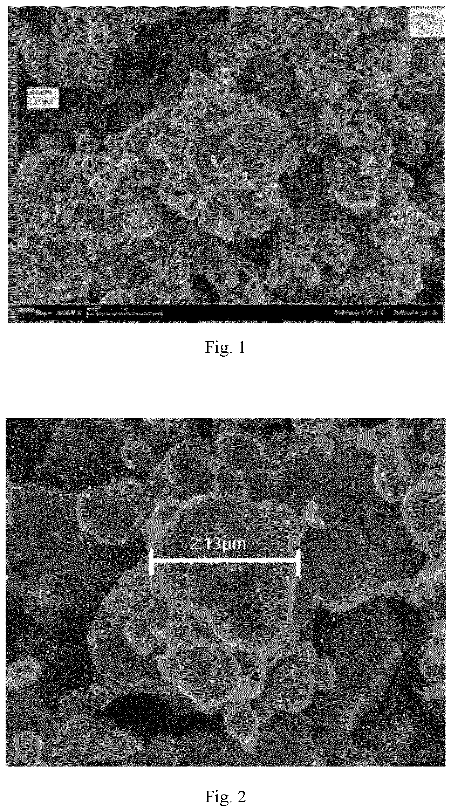

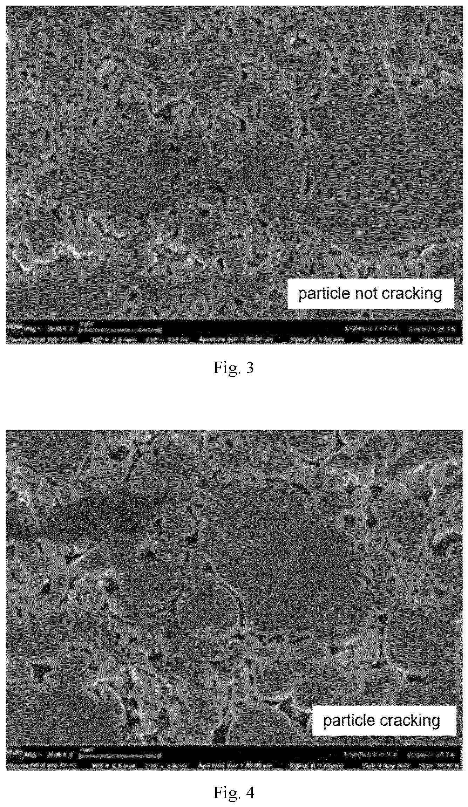

S1: Preparation of lithium iron phosphate cathode sheet: lithium iron phosphate particles are used as the active material of the cathode, in terms of particle number, the particle size distribution of the lithium iron phosphate particles is as follows: a percentage of lithium iron phosphate particles with a particle size in the range of 50nm-500nm is 77.06%, a percentage of lithium iron phosphate particles with a particle size in the range of 500nm-1000nm is 16.68%, and a percentage of lithium iron phosphate particles with a particle size in the range of 1 µ m-10 µ m is 6.25%; carbon nanotubes and graphene are used as conductive agents, polyvinylidene fluoride PVDF is used as binder, N-methylpyrrolidone NMP is used as solvent, and the slurry is prepared by stirring uniformly, which is then coated on the aluminum foil current collector and pressed under the pressure of 5.2MPa, the solvent in the slurry is 50 parts by weight;
Wherein, based on the total weight of the lithium iron phosphate cathode sheet, the lithium iron phosphate cathode sheet includes 95 parts by weight of lithium iron phosphate particles, 2 parts by weight of a conductive agent and 3 parts by weight of a binder; the compacted density of the prepared lithium iron phosphate cathode sheet is 2.62g/cm³, the areal density is 400g/m², and the porosity is 28%; the SEM images are shown in Figure 1 and Figure 2, and the plasma cutting SEM electron microscope image is shown in Figure 3, from which it can be seen that the fragmentation of the lithium iron phosphate particles is not caused in the pressing process, and the complete morphology of the raw materials of the lithium iron phosphate particles is maintained;
S2: Preparation of anode sheet: artificial graphite and conductive carbon black are used as anode materials for anode, sodium carboxymethyl cellulose CMC and styrene-butadiene rubber SBR are used as binders, deionized water is used as solvent, and after mixing uniformly, it is coated on a copper foil current collector;
S3: Preparation of lithium iron phosphate laminated lithium-ion battery: the cathode and anode are die-cut to the designed shape, the cathode and the anode are stacked alternately, the separator is folded in a zigzag shape, the core is thermal sealed in the shell made of aluminum plastic film, the cathode multi-layer aluminum foil of the cell is transferred by an aluminum foil, the anode multi-layer copper foil is transferred by a copper foil, the hot melt adhesive on the foil is thermal sealed with the aluminum-plastic film aluminum shell, EC/DMC/EMC+LiPF6+additive are used as the electrolyte, 20 µ m PE ion-exchange membrane is used as the separator, and the laminated lithium-ion battery is obtained as shown in Figure 5; Lanqi charging cabinet is used for chemical formation, the battery is activated by charging to 3.8V with a 0.1C constant current and discharging to 2.0V with a 0.1C current, and the lithium iron phosphate battery is obtained with a volumetric energy density of 272KWh/m³ and a weight energy density of 200Wh/kg.

### Example 2

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 85.41%, a percentage of lithium iron phosphate particles with a particle size in the range of 500nm-1000nm is 10.44%, and a percentage of lithium iron phosphate particles with a particle size in the range of 1 µ m-10 µ m is 4.15%;
The compacted density of the prepared lithium iron phosphate cathode sheet is 2.68g/cm³, the areal density is 400g/m², the porosity is 25%, the volumetric energy density of the prepared lithium iron phosphate battery is 274KWh/m³ and the weight energy density is 204Wh/kg.

### Example 3

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 86.31%, a percentage of lithium iron phosphate particles with a particle size in the range of 500nm-1000nm is 9.07%, and a percentage of lithium iron phosphate particles with a particle size in the range of 1 µ m-10 µ m is 4.62%;
The compacted density of the prepared lithium iron phosphate cathode sheet is 2.70g/cm³, the areal density is 402g/m², the porosity is 23%, the volumetric energy density of the prepared lithium iron phosphate battery is 276KWh/m³ and the weight energy density is 208Wh/kg.

### Example 4

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 70%, a percentage of lithium iron phosphate particles with a particle size in the range of 500nm-1000nm is 20%, and a percentage of lithium iron phosphate particles with a particle size in the range of 1 µ m-10 µ m is 10%;
The compacted density of the prepared lithium iron phosphate cathode sheet is 2.72g/cm³, the areal density is 395g/m², the porosity is 22%, the volumetric energy density of the prepared lithium iron phosphate battery is 275KWh/m³ and the weight energy density is 206Wh/kg.

### Example 5

The method of Example 1 is used to prepare the lithium iron phosphate laminated lithium ion battery, and the only difference is that: in step S 1, the particle size distribution of the lithium iron phosphate particles is as follows: a percentage of lithium iron phosphate particles with a particle size in the range of 50nm-500nm is 90%, a percentage of lithium iron phosphate particles with a particle size in the range of 500nm-1000nm is 5.5%, and a percentage of lithium iron phosphate particles with a particle size in the range of 1 µ m-10 µ m is 4.5%;
The compacted density of the prepared lithium iron phosphate cathode sheet is 2.75g/cm³, the areal density is 402g/m², the porosity is 21%, the volumetric energy density of the prepared lithium iron phosphate battery is 276KWh/m³ and the weight energy density is 208Wh/kg.

### Example 6

The method of Example 1 is used to prepare the lithium iron phosphate laminated lithium ion battery, and the only difference is that: in step S 1, the pressure of the pressing is 8MPa;
The compacted density of the prepared lithium iron phosphate cathode sheet is 2.8g/cm³, the areal density is 400g/m², the porosity is 20%, the volumetricenergy density of the prepared lithium iron phosphate battery is 278KWh/m³ and the weight energy density is 210Wh/kg.

### Comparative Example 1

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 93.50%, a percentage of lithium iron phosphate particles with a particle size in the range of 500nm-1000nm is 5.04%, and a percentage of lithium iron phosphate particles with a particle size in the range of 1 µ m-10 µ m is 1.46%;
The compacted density of the prepared lithium iron phosphate cathode sheet is 2.46g/cm³, the areal density is 408g/m², the porosity is 28%, the volumetric energy density of the prepared lithium iron phosphate battery is 266KWh/m³, the weight energy density is 192Wh/kg and the plasma cutting SEM electron microscope image of the pressed lithium iron phosphate anode sheet is shown in Figure 4.

### Comparative Example 2

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 96.86%, a percentage of lithium iron phosphate particles with a particle size in the range of 500nm-1000nm is 2.64%, and a percentage of lithium iron phosphate particles with a particle size in the range of 1 µ m-10 µ m is 0.50%;
The compacted density of the prepared lithium iron phosphate cathode sheet is 2.54g/cm³, the areal density is 396g/m², the porosity is 30%, the volumetric energy density of the prepared lithium iron phosphate battery is 267KWh/m³ and the weight energy density is 188Wh/kg.

### Comparative Example 3

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 56.41%, a percentage of lithium iron phosphate particles with a particle size in the range of 500nm-1000nm is 23.45%, a percentage of lithium iron phosphate particles with a particle size in the range of 1 µ m-10 µ m is 14.37% and a percentage of lithium iron phosphate particles with a particle size in the range of 10 µ m-50 µ m is 5.77%;
The compacted density of the prepared lithium iron phosphate cathode sheet is 2.42g/cm³, the areal density is 400g/m², the porosity is 32%, the volumetric energy density of the prepared lithium iron phosphate battery is 265KWh/m³ and the weight energy density is 180Wh/kg.

### Comparative Example 4

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 46.25%, a percentage of lithium iron phosphate particles with a particle size in the range of 500nm-1000nm is 13.28%, a percentage of lithium iron phosphate particles with a particle size in the range of 1 µ m-10 µ m is 35.82% and a percentage of lithium iron phosphate particles with a particle size in the range of 10 µ m-50 µ m is 4.65%;
The compacted density of the prepared lithium iron phosphate cathode sheet is 2.38g/cm³, the areal density is 402g/m², the porosity is 32%, the volumetric energy density of the prepared lithium iron phosphate battery is 264KWh/m³ and the weight energy density is 175Wh/kg.

### Comparative Example 5

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 500nm-1000nm is 5.62%, a percentage of lithium iron phosphate particles with a particle size in the range of 1 µ m-10 µ m is 78.25% and a percentage of lithium iron phosphate particles with a particle size in the range of 10 µ m-50 µ m is 16.13%;
The compacted density of the prepared lithium iron phosphate cathode sheet is 2.12g/cm³, the areal density is 400g/m², the porosity is 38%, the volumetric energy density of the prepared lithium iron phosphate battery is 262KWh/m³ and the weight energy density is 160Wh/kg.

### Comparative Example 6

The method of Example 1 is used to prepare the lithium iron phosphate laminated lithium ion battery, and the only difference is that: in step S 1, the particle size distribution of the lithium iron phosphate particles is as follows: a percentage of lithium iron phosphate particles with a particle size in the range of 500nm-1000nm is 7.24%, a percentage of lithium iron phosphate particles with a particle size in the range of 1 µ m-10 µ m is 84.27% and a percentage of lithium iron phosphate particles with a particle size in the range of 10 µ m-50 µ m is 8.49%;
The compacted density of the prepared lithium iron phosphate cathode sheet is 2.18g/cm³, the areal density is 400g/m², the porosity is 37.6%, the volumetric energy density of the prepared lithium iron phosphate battery is 263KWh/m³ and the weight energy density is 162Wh/kg.

### Comparative Example 7

The method of Example 1 is used to prepare the lithium iron phosphate laminated lithium ion battery, and the only difference is that: in step S 1, the particle size distribution of the lithium iron phosphate particles is as follows: a percentage of lithium iron phosphate particles with a particle size in the range of 50nm-500nm is 2.48%, a percentage of lithium iron phosphate particles with a particle size in the range of 500nm-1000nm is 44.97%, a percentage of lithium iron phosphate particles with a particle size in the range of 1 µ m-10 µ m is 44.29% and a percentage of lithium iron phosphate particles with a particle size in the range of 10 µ m-50 µ m is 8.26%;
The compacted density of the prepared lithium iron phosphate cathode sheet is 2.32g/cm³, the areal density is 400g/m², the porosity is 34%, the volumetric energy density of the prepared lithium iron phosphate battery is 264KWh/m³ and the weight energy density is 175Wh/kg.

### Comparative Example 8

The method of Example 1 is used to prepare the lithium iron phosphate laminated lithium ion battery, and the only difference is that: in step S1, the particle size distribution of the lithium iron phosphate particles is as follows: a percentage of lithium iron phosphate particles with a particle size in the range of 50nm-500nm is 3.68%, a percentage of lithium iron phosphate particles with a particle size in the range of 500nm-1000nm is 56.29%, a percentage of lithium iron phosphate particles with a particle size in the range of 1 µ m-10 µ m is 36.51% and a percentage of lithium iron phosphate particles with a particle size in the range of 10 µ m-50 µ m accouis 3.52%;
The compacted density of the prepared lithium iron phosphate cathode sheet is 2.29g/cm³, the areal density is 400g/m², the porosity is 33%, the volumetric energy density of the prepared lithium iron phosphate battery is 265KWh/m³ and the weight energy density is 178Wh/kg.

### Test Examples

1. After coating, pressing, 24H after pressing, ultimate pressing; the electrode sheet is weighed by using an electronic scale to obtain the areal density of the electrode sheet; the thickness is measured by using a micrometer and 10 data are collected; compacted density of the electrode sheet = areal density of the electrode sheet / (thickness of the electrode sheet - thickness of the current collector); particle cracking is observed by scanning electron microscope;
2. The BK-6808A model Lanqi charging cabinet is used for the initial formation, by charging to 3.8V with a 0.1C constant current and discharging to 2.0V with a 0.1C current, resulting in a capacity of 500mAh after formation, wherein discharge capacity/battery volume = energy density;
3. The battery performance is evaluated in the CT2001A Lanqi charging cabinet by using a special charging and discharging system, and the discharge capacity can exceed 100% affected by thermodynamics:
   5C rate discharging, the evaluation method is 1C constant current charging to 3.8V, and 5C constant current discharging to 2.0V;
   2C rate charging, the evaluation method is 2C constant current charging to 3.8V, and 1C constant current discharging to 2.0V;
   1C cycle, the method is 1C constant current charging to 3.8V, 1C constant current discharging to 2.0V, and the capacity retention rate of 1000 cycles.

The test results are shown in Table 1.

**Table 1**

| | Compacted density of the electrode sheet, g/cm³ | 5C rate discharging, % | 2C rate charging, % | Cycle performance, % |
|---|---|---|---|---|
| Example 1 | 2.62 | 101 | 100 | 97 |
| Example 2 | 2.68 | 102 | 101 | 98 |
| Example 3 | 2.70 | 101 | 100 | 95 |
| Example 4 | 2.59 | 100 | 98 | 94 |
| Example 5 | 2.57 | 99 | 97 | 93 |
| Example 6 | 2.54 | 98 | 97 | 94 |
| Comparative Example 1 | 2.46 | 101 | 99 | 92 |
| Comparative Example 2 | 2.54 | 102 | 100 | 91 |
| Comparative Example 3 | 2.42 | 92 | 95 | 91 |
| Comparative Example 4 | 2.38 | 94 | 96 | 93 |
| Comparative Example 5 | 2.12 | 86 | 84 | 90 |
| Comparative Example 6 | 2.18 | 83 | 90 | 88 |
| Comparative Example 7 | 2.32 | 86 | 75 | 81 |
| Comparative Example 8 | 2.29 | 90 | 80 | 79 |

Analysis of the results: the lithium iron phosphate particle cathode sheets prepared with the particle size and ratio of the lithium iron phosphate particles in Comparative Examples 1-8 have low energy density and poor cycle performance; The lithium iron phosphate cathode sheets prepared by changing the particle size and ratio in Examples 4-6 have better compacted density and cycle performance, and the particle size and ratio are further optimized resulting in the ultra-high compaction density and more than 100% of discharging performance in Examples 1-3.

The preferred embodiments of the present disclosure have been described above in detail. However, the present disclosure is not limited to the specific details of the above-mentioned embodiments. Within the scope of the technical concept of the present disclosure, various simple modifications can be made to the technical solutions of the present disclosure. These simple modifications all belong to the protection scope of the present disclosure.

In addition, it should be noted that each specific technical feature described in the above-mentioned specific implementation manner may be combined in any suitable manner under the circumstance without contradiction. In order to avoid unnecessary repetition, various possible combinations are not described in the present disclosure.

In addition, the various embodiments of the present disclosure can also be arbitrarily combined, and as long as they do not violate the spirit of the present disclosure, they should also be regarded as the contents disclosed in the present disclosure.

In the description of this specification, description of the reference terms "one embodiment," "some embodiments," "example," "specific example," or "some examples", etc., mean specific features described in connection with the embodiment or example, structures, materials or features are included in at least one embodiment or example of the present disclosure. In this specification, schematic representations of the above terms are not necessarily directed to the same embodiment or example. Furthermore, the specific features, structures, materials or characteristics described may be combined in any suitable manner in any one or more embodiments or examples. Furthermore, a person skilled in the art may combine and make up the different embodiments or examples described in this specification, as well as the features of the different embodiments or examples, without conflicting each other.

Although the embodiments of the present disclosure have been shown and described above, it should be understood that the above-mentioned embodiments are exemplary and should not be construed as limit to the present disclosure. Embodiments are subject to variations, modifications, substitutions and variations by a person skilled in the art within the scope of the disclosure.

## Claims

1. A lithium iron phosphate cathode sheet, wherein the lithium iron phosphate cathode sheet comprises lithium iron phosphate particles, in the lithium iron phosphate particles, in terms of particle number, a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

2. The lithium iron phosphate cathode sheet according to claim 1, in the lithium iron phosphate particles, wherein the percentage of lithium iron phosphate particles with a particle size in the range of 50nm-500nm is 75-87%, the percentage of lithium iron phosphate particles with a particle size greater than 500nm and less than 1000nm is 8-17%, and the percentage of lithium iron phosphate particles with a particle size in the range of 1µm-10µm is 3-7%.

3. The lithium iron phosphate cathode sheet according to claim 1 or 2, wherein a compacted density of the lithium iron phosphate cathode sheet is 2.6 g/cm³-2.8 g/cm³, an areal density of the lithium iron phosphate cathode sheet is 380 g/m²-420 g/m², and a porosity of the lithium iron phosphate cathode sheet is 20%-30%.

4. The lithium iron phosphate cathode sheet according to any one of claims 1-3, wherein the lithium iron phosphate cathode sheet further comprises a binder and a conductive agent;
based on the weight of the lithium iron phosphate cathode sheet, a content of the lithium iron phosphate particles is 94-98 parts by weight, a content of the binder is 1-3 parts by weight, and a content of the conductive agent is 1 -3 parts by weight;
the binder comprises one or more of polyvinylidene fluoride , sodium carboxymethyl cellulose, styrene-butadiene rubber, acrylonitrile multipolymer and polyacrylic acid, and the conductive agent comprises one or more of carbon nanotubes, graphene, carbon black and carbon fiber.

5. A method for preparing a lithium iron phosphate cathode sheet, comprising: coating a slurry including lithium iron phosphate particles, a conductive agent, a binder and a solvent on an electrode current collector and pressing; in the lithium iron phosphate particles, in terms of particle number, a percentage of lithium iron phosphate particles with a particle size in the range of 50nm-500nm is 70-90%, a percentage of lithium iron phosphate particles with a particle size greater than 500nm and less than 1000nm is 5-20%, and a percentage of lithium iron phosphate particles with a particle size in the range of 1µm-10µm is 2-10%.

6. The method according to claim 5, wherein, in the lithium iron phosphate particles, wherein the percentage of lithium iron phosphate particles with a particle size in the range of 50nm-500nm is 75-87%, the percentage of lithium iron phosphate particles with a particle size greater than 500nm and less than 1000nm is 8-17%, and the percentage of lithium iron phosphate particles with a particle size in the range of 1µm-10µm is 3-7%.

7. The method according to claim 5 or 6, wherein, based on the weight of the lithium iron phosphate cathode sheet, a content of the lithium iron phosphate particles is 94-98 parts by weight, a content of the binder is 1-3 parts by weight, and a content of the conductive agent is 1-3 parts by weight; the conductive agent comprises one or more of carbon nanotubes, graphene, carbon black and carbon fiber, the binder comprises one or more of polyvinylidene fluoride, sodium carboxymethyl cellulose, styrene-butadiene rubber, acrylonitrile multipolymer and polyacrylic acid, the solvent comprises one or more of N-methylpyrrolidone, deionized water, acetone and dimethylacetamide, a content of the solvent in the slurry is 50-55 parts by weight; the electrode current collector is aluminum foil; and a pressure of the pressing is 4 MPa-6 MPa.

8. A lithium iron phosphate lithium-ion battery, wherein the lithium iron phosphate lithium-ion battery comprises the lithium iron phosphate cathode sheet according to any one of claims 1-4 or the lithium iron phosphate cathode sheet obtained by the method of any one of claims 5-7.

9. The lithium iron phosphate lithium-ion battery according to claim 8, wherein a volumetric energy density of the lithium iron phosphate battery is 260 KWh/m³-280 KWh/m³, and a weight energy density of the lithium iron phosphate battery is 190 Wh/kg-210 Wh/kg.
